# EUROPEAN PATENT APPLICATION

(11) **EP 4 027 583 A2**
(43) Date of publication of application: **13.07.2022**
(21) Application number: 22151025.8
(22) Date of filing: 11.01.2022
(51) Int. Cl.: H04L 9/40

(54) **METHOD AND APPARATUS FOR MAINTAINING WEB APPLICATION FIREWALL BASED ON NON-FACE-TO-FACE AUTHENTICATION**

(30) Priority: 11.01.2021 KR 20210003577
(71) Applicant: Penta Security Systems, Inc., Seoul 07241 (KR)
(72) Inventor: LEE, Seok Woo, 04604 Seoul (KR); KIM, Tae Gyun, 16811 Gyeonggi-do (KR); NAM, Kyung Moon, 06938 Seoul (KR); JUNG, Il Koo, 11750 Gyeonggi-do (KR); JUNG, Jin Hyuk, 10417 Gyeonggi-do (KR)
(74) Representative: Zimmermann, Tankred Klaus

(57) **Abstract**

Provided are a method and apparatus for maintaining a web application firewall (WAF) on the basis of non-face-to-face authentication. The method is performed by a non-face-to-face authentication maintenance server connected to a maintenance-target device through a network and includes requesting a machine learning (ML) server to make a non-face-to-face ML self-attack on the maintenance-target device selected through user authentication in the network, requesting an ML hardware (H/W) self-check module of the maintenance-target device connected through the network to have a non-face-to-face ML self-check, and receiving an ML-based self-check result based on first change information of a security monitoring module of the maintenance-target device and second change information of a H/W management module of the maintenance-target device from a maintenance module of the maintenance-target device.

## Description

### CLAIM FOR PRIORITY

This application claims priority to Korean Patent Application No. 2021-0003577 filed on January 11, 2021 in the Korean Intellectual Property Office (KIPO), the entire contents of which are hereby incorporated by reference.

### BACKGROUND

### 1. Technical Field

Example embodiments of the present invention relate, in general, to a method of maintaining a web application firewall (WAF) on the basis of non-face-to-face authentication and, more specifically, to a method and apparatus for maintaining a WAF in a non-face-to-face authentication manner using a machine learning (ML)-based self-check.

### 2. Related Art

A web application firewall (WAF) generally refers to a solution that is developed specially for web application security unlike a general network firewall. The fundamental role of a WAF is to detect and block web attacks such as a structure query language (SQL) injection and a cross-site scripting (XSS). In addition to direct handling of web attacks, a WAF may be used as a solution for preventing information leakage, fraudulent login, website tampering, etc.

WAFs are roughly classified into a hardware (H/W) type, a software (S/W) type, and a cloud type.

The conventional H/W type WAF (Hereafter briefly H/W WAF) is installed in a local area network (LAN) that is close to web and application servers. Generally, an operating system (OS) is installed on H/W, and the OS supports S/W configurations and updates. The H/W WAF has advantages of high speed and performance. Since the H/W WAF is physically close to a server, it is possible to rapidly track and filter data packets transmitted and received through websites. Although the H/W WAF is helpful in protecting application domains due to the rapid tracking and filtering functions, relatively high costs are required for purchasing, installing, and maintaining the H/W.

The conventional S/W type WAF (Hereafter briefly S/W WAF) is installed on a virtual machine (VM) without H/W. All components are basically the same as those of the H/W WAF, but there is a difference in that a supervisor is required for a user to execute the VM. The advantage of the S/W WAF is flexibility. In other words, not only the S/W WAF may be used in in-company systems, but also the VM may be connected to cloud-based web and application servers. Also, the S/W WAF may be introduced at a lower cost than the H/W WAF. However, since the S/W WAF is run on a VM, there is a drawback in that the S/W WAF may show lower speed than the H/W WAF in monitoring and filtering processes.

The conventional cloud type WAF (Hereafter briefly cloud WAF) is provided and managed in the form of S/W-as-a-service (SaaS) directly by a service provider. Since the components of the cloud WAF are located in a cloud, users don't have to install anything on their local machines or VMs. Simplicity is the advantage of the cloud WAF. In other words, users get ready to use a WAF by signing up for the service without physically installing any S/W. The service provider generally provides all optimization and update elements so that users do not have to manage their own WAF. Such simplicity and convenience are advantages in terms of managing a WAF. However, a service provider company manages the service, and thus it may be difficult to make detailed settings according to other company's environments.

Recent intelligent WAFs use a method of detecting attacks by combining techniques, such as blacklist scanning, whitelist scanning, and web traffic content analysis, in a logical form according to web attack types and thereby remarkably reduce misdetections compared to the conventional first-generation or second generation WAFs.

Meanwhile, in various pieces of H/W or S/W, Internet of Things (IoT) devices, smart meters, autonomous vehicle platforms, etc. used by users for web access or web services, new web applications are installed or updated at short cycles. Accordingly, it is necessary to monitor the security of a WAF resulting from a new web application in real time and periodically or rapidly apply security updates.

However, the conventional methods of maintaining H/W, S/W, or cloud WAFs require an engineer to visit a customer company in person and manually check an installed product or to remotely access a personal computer of a customer and manually check an installed product. Accordingly, it is difficult to perform a real-time check and prevent a human error of an engineer such that an efficient check is not possible.

As described above, a method of effectively maintaining WAFs is currently required for a real-time check function, human error prevention, etc.

### SUMMARY

Accordingly, example embodiments of the present invention are provided to substantially obviate one or more problems due to limitations and disadvantages of the related art.

Example embodiments of the present invention provide a method of maintaining a web application firewall (WAF) on the basis of non-face-to-face authentication which employs a machine learning (ML)-based self-check and thus is effective in a real-time check function and preventing a human error.

Example embodiments of the present invention also provide an apparatus for maintaining a WAF on the basis of non-face-to-face authentication in which the method of maintaining a WAF is used.

In some example embodiments, a method of maintaining a WAF on the basis of non-face-to-face authentication using an ML self-check function is performed by a non-face-to-face authentication maintenance server connected to a maintenance-target device through a network and includes requesting an ML server to make a non-face-to-face ML self-attack on the maintenance-target device selected through user authentication in the network, requesting an ML hardware (H/W) self-check module of the maintenance-target device connected through the network to have a non-face-to-face ML self-check, and receiving an ML-based self-check result based on first change information of a security monitoring module of the maintenance-target device and second change information of a H/W management module of the maintenance-target device from a maintenance module of the maintenance-target device.

The method may further include comparing, by the ML server, previously stored first ML data regarding the maintenance-target device and second ML data of the maintenance-target device received from an ML web vulnerability receiver of the maintenance-target device and updating the second ML data on the basis of a comparison result.

The ML web vulnerability receiver may transfer an update result of the second ML data to a self-attack module of the maintenance-target device, and the self-attack module may make an attack on the security monitoring module on the basis of the update result, receive a result of the attack from the security monitoring module, and transfer security monitoring update information to the security monitoring module on the basis of the attack and the result of the attack. The security monitoring module may generate the first change information on the basis of the security monitoring update information.

The ML H/W self-check module may perform a real-time H/W self-check on a WAF of the maintenance-target device, receive a previously stored H/W check result of the H/W management module, generate H/W update information by comparing the H/W check result and a result of the H/W self-check, and transfer the H/W update information to the H/W management module. The H/W management module may generate the second change information on the basis of the H/W update information.

The maintenance-target device may include a WAF in the form of equipment or a program or security equipment or a security program equipped with the WAF, a platform of an autonomous vehicle accessible through a wired or wireless network, a WAF of a network of a home or office in which Internet of Things (IoT) home appliances are used, or a meter for the consumption of daily life resources including at least one of gas, water, and electricity.

In other example embodiments, a method of maintaining a WAF on the basis of non-face-to-face authentication using an ML self-check function is performed by a maintenance-target device connected to a non-face-to-face authentication maintenance server and an ML server through a network and includes receiving, by an ML H/W self-check module of the maintenance-target device, a non-face-to-face ML self-check request from the non-face-to-face authentication maintenance server, performing a real-time self-check on H/W of a WAF of the maintenance-target device on the ML self-check request, comparing a H/W check result received from a H/W management module of the maintenance-target device and a result of the real-time self-check, generating H/W update information on the basis of a comparison result, and transferring the H/W update information to the H/W management module, transmitting, by an ML web vulnerability receiver of the maintenance-target device connected to the ML server, second ML data for a non-face-to-face ML self-attack to the ML server, receiving, by the ML web vulnerability receiver, update information of the ML server based on a comparison result between first ML data of the ML server and the second ML data to update the second ML data, and transferring an update result to a self-attack module of the maintenance-target device, attacking, by the self-attack module, a security monitoring module of the maintenance-target device, receiving a result of the attack from the security monitoring module, and transferring security monitoring update information to the security monitoring module on the basis of the result of the attack, and transmitting, by a maintenance module of the maintenance-target device, an ML-based self-check result based on first change information, which is generated by the security monitoring module on the basis of the security monitoring update information, and second change information, which is generated by the H/W management module on the basis of the H/W update information, to the non-face-to-face authentication maintenance server.

The method may further include receiving, by the ML server, a request for the non-face-to-face ML self-attack from the non-face-to-face authentication maintenance server.

In other example embodiments, an apparatus for maintaining a WAF on the basis of non-face-to-face authentication using an ML self-check function is a maintenance-target device connected to a non-face-to-face authentication maintenance server and an ML server through a network and includes an ML web vulnerability receiver configured to provide second ML data for a non-face-to-face ML self-attack to the ML server connected through the network, receive web vulnerability update information based on a comparison result between first ML data of the ML server and the second ML data from the ML server to update the second ML data, and transfer web vulnerability information according to an update result to a self-attack module, the self-attack module configured to attack a security monitoring module of the maintenance-target device on the basis of the update result, receive a result of the attack from the security monitoring module, and transfer security monitoring update information to the security monitoring module on the basis of the result of the attack, the security monitoring module configured to generate first change information on the basis of the security monitoring update information and transfer the first change information to a maintenance module, an ML H/W self-check module configured to receive a non-face-to-face ML self-check request from the non-face-to-face authentication maintenance server, perform a real-time self-check on H/W of a WAF of the maintenance-target device on the ML self-check request, compare a H/W check result received from a H/W management module and a result of the real-time self-check, generate H/W update information on the basis of a comparison result, and transfer the H/W update information to the H/W management module, the H/W management module configured to generate second change information on the basis of the H/W update information and transfer the second change information to the maintenance module, and the maintenance module configured to transmit an ML-based self-check result based on the first change information and the second change information to the non-face-to-face authentication maintenance server.

In other example embodiments, an apparatus for maintaining a WAF on the basis of non-face-to-face authentication using an ML self-check function is an apparatus for maintaining a WAF on the basis of non-face-to-face authentication, which is connected to a maintenance-target device through a network and maintains a WAF on the basis of non-face-to-face authentication, and includes a non-face-to-face authentication maintenance server configured to transmit a non-face-to-face ML self-attack request against the maintenance-target device selected through user authentication in the network to an ML server and request an ML H/W self-check module of the maintenance-target device connected through the network to have a non-face-to-face ML self-check and the ML server configured to compare first ML data previously stored regarding the maintenance-target device and second ML data received from an ML web vulnerability receiver in cooperation with the ML web vulnerability receiver on the non-face-to-face ML self-attack request to generate web vulnerability update information and transfer the generated web vulnerability update information to the ML web vulnerability receiver. The non-face-to-face authentication maintenance server receives an ML-based self-check result generated on the basis of first change information and second change information from the maintenance-target device. The first change information is generated on the basis of security monitoring update information according to a web vulnerability-based self-attack result of the maintenance-target device. The second change information is generated on the basis of H/W update information of the maintenance-target device according to a real-time self-check of the ML H/W self-check module.

### BRIEF DESCRIPTION OF DRAWINGS

Example embodiments of the present invention will become more apparent by describing example embodiments of the present invention in detail with reference to the accompanying drawings, in which:
FIG. 1 is a block diagram of an apparatus for maintaining a web application firewall (WAF) on the basis of non-face-to-face authentication using a machine learning (ML) self-check function according to an example embodiment of the present invention;
FIG. 2 is a diagram illustrating an ML module that may be employed in the apparatus for maintaining a WAF shown in FIG. 1;
FIG. 3 is a flowchart illustrating a method of maintaining a WAF on the basis of non-face-to-face authentication using an ML self-check function according to another example embodiment of the present invention;
FIG. 4 is a block diagram of an apparatus for maintaining a WAF on the basis of non-face-to-face authentication using an ML self-check function according to still another example embodiment of the present invention;
FIGS. 5A and 5B are sequential diagrams illustrating a method of maintaining a WAF on the basis of non-face-to-face authentication using an ML self-check function according to yet another example embodiment of the present invention;
FIG. 6 is a block diagram illustrating a detailed configuration of a security monitoring module that may be employed in a WAF maintenance apparatus according to the present embodiment;
FIG. 7 is a block diagram illustrating an ML engine of the security monitoring module of FIG. 6;
FIG. 8 is a block diagram illustrating a logic analysis engine of the security monitoring module of FIG. 6;
FIG. 9 is an example of an administrator terminal screen illustrating a self-check process performed by a hardware (H/W) management module of the WAF maintenance apparatus according to the present embodiment;
FIG. 10 is an example diagram illustrating an installation structure of the WAF maintenance apparatus according to the present embodiment;
FIG. 11 is another example diagram illustrating an installation structure of the WAF maintenance apparatus according to the present embodiment; and
FIG. 12 is still another example diagram illustrating an installation structure of the WAF maintenance apparatus according to the present embodiment.

### DETAILED DESCRIPTION OF EMBODIMENTS

While the invention is susceptible to various modifications and alternative forms, specific embodiments thereof are shown by way of example in the accompanying drawings and will herein be described in detail. It should be understood, however, that there is no intent to limit the invention to the particular forms disclosed, but on the contrary, the invention is to cover all modifications, equivalents, and alternatives falling within the scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*i.e.,* "between" versus "directly between," "adjacent" versus "directly adjacent," etc.).

The terminology used herein is for the purpose of describing particular embodiments only and is not intended to be limiting of the invention. As used herein, the singular forms "a" and "an" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in detail with reference to the accompanying drawings.

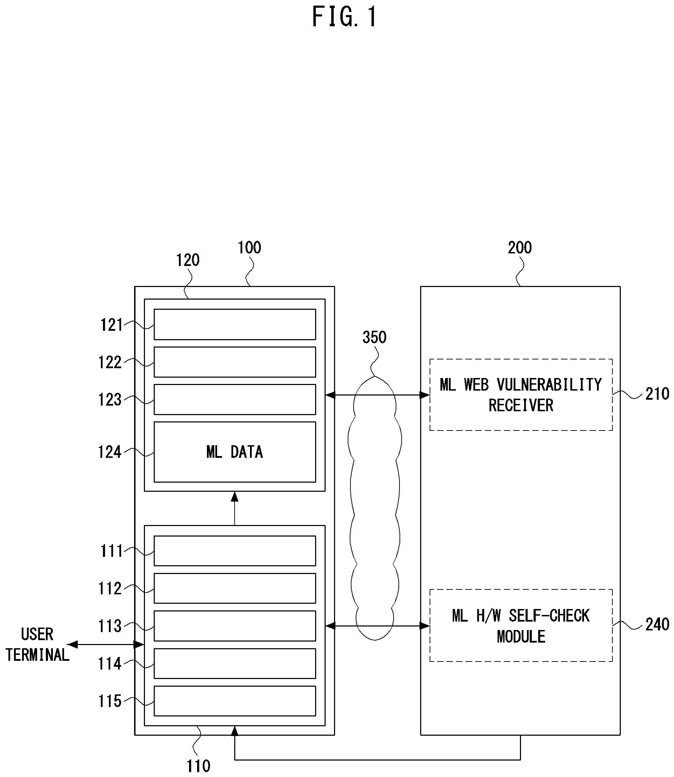

FIG. 1 is a block diagram of an apparatus for maintaining a web application firewall (WAF) on the basis of non-face-to-face authentication using a machine learning (ML) self-check function (hereinafter "maintenance apparatus") according to an example embodiment of the present invention.

Referring to FIG. 1, the maintenance apparatus according to the present embodiment includes a non-face-to-face authentication maintenance server 110 and an ML server 120. In a narrow sense, the maintenance apparatus includes a server device 100 that is connected to a maintenance-target device 200 through a network 350.

The non-face-to-face authentication maintenance server 110 includes a user authentication processing part 111, a maintenance target device selector 112, a self-attack request part 113, a self-check request part 114, and a maintenance result receiver 115.

The user authentication processing part 111 may authenticate a user who accesses the non-face-to-face authentication maintenance server 110 through a network and output a signal or information for selecting a maintenance-target device according to user information of the authenticated user or a WAF maintenance request of the authenticated user.

The maintenance target device selector 112 selects a maintenance-target device in a previously stored maintenance target list on the basis of an output signal of the user authentication processing part 111 of information corresponding to the output signal. Information related to the maintenance-target device may be stored together with entries of the maintenance-target device selected by the maintenance target device selector 112, or information on a record location or link at which the information related to the maintenance-target device is recorded may be connected to the entries. The information related to the maintenance-target device may include information on, for example, a device type, a device configuration, a web address, an access address, an access code, and a type of WAF.

The self-attack request part 113 transmits a non-face-to-face ML self-attack request message against the maintenance-target device 200 to the ML server 120 on the basis of the information related to the maintenance-target device 200 which is obtained from the maintenance target device selector 112.

The self-check request part 114 transmits a non-face-to-face ML self-check request message to the ML hardware (H/W) self-check module 240 on the basis of device information of the maintenance-target device obtained from the maintenance target device selector 112.

The maintenance result receiver 115 may receive a maintenance result from the maintenance-target device 200 through the network according to first change information reflecting a security monitoring result regarding an ML self-attack and second change information reflecting an ML H/W self-check result.

The above-described non-face-to-face authentication maintenance server 110 includes a memory for storing a program and a processor for executing the program in connection with the memory. The processor may be implemented to perform a function of each of the user authentication processing part 111, the maintenance target device selector 112, the self-attack request part 113, the self-check request part 114, and the maintenance result receiver 115 according to the program.

The ML server 120 includes a message processing part 121, a data comparator 122, an ML module 123, and ML data 124.

The message processing part 121 receives the non-face-to-face ML self-attack request message from the non-face-to-face authentication maintenance server 110 and requests ML data (second ML data) stored in advance in an ML web vulnerability receiver 210 of the maintenance-target device on the basis of the information related to the maintenance-target device which is included in the request message.

According to a form of implementation, the message processing part 121 may also acquire the corresponding data by reading the second ML data stored in the ML web vulnerability receiver 210 or a storage of the maintenance-target device through a data acquisition part of the ML server 120 or using another method.

The data comparator 122 compares data which is stored in the ML data 124 and corresponds to the maintenance-target device (first ML data) and the second ML data acquired from the maintenance-target device. The comparison result of the data comparator 122 may be output as update information of the second ML data 124 and transmitted to the ML web vulnerability receiver 210 through a transmitter of the ML server 120.

The ML module 123 performs training with latest ML data on several WAFs or devices to be maintained according to a WAF maintenance policy set for the maintenance apparatus 100 and stores the latest ML data.

In other words, when there is an update of a web application or a new web application is released, the ML module 123 may test the performance of a WAF against various web attacks on the update of the web application or the new web application on the basis of ML and store self-attack update information, security monitoring update information, H/W update information, S/W update information, WAF update information, or a combination thereof according to the test result as the ML data 124 corresponding to reference ML data or the first ML data.

The ML data 124 may be stored in a storage of the maintenance apparatus 100 connected to the ML server 120. However, the ML data 124 is not limited thereto and may be stored in an arbitrary recording medium, which is accessible through a network, and used by the ML server 120 as necessary.

In the present embodiment, the maintenance-target device 200 may include a WAF in the form of equipment or a program or security equipment or a security program equipped with the WAF. Also, the maintenance-target device 200 may include a platform of an autonomous vehicle that is accessible through a wired or wireless network. Also, the maintenance-target device 200 may include a WAF of a house or office network in which Internet of Things (IoT) home appliances are used. Also, the maintenance-target device 200 may include a meter for the consumption of daily life resources including at least one of gas, water, and electricity.

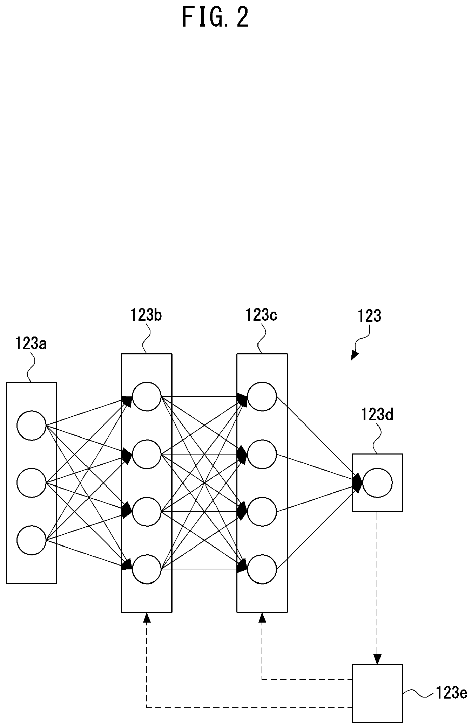

FIG. 2 is a diagram illustrating an ML module that may be employed in the apparatus for maintaining a WAF shown in FIG. 1.

Referring to FIG. 2, an ML module 123 that may be employed in an ML server of a maintenance apparatus according to the present embodiment includes an input layer 123a, a first hidden layer 123b, a second hidden layer 123c, and an output layer 123d. The ML module 123 may further include an optimizer 123e that updates weights of the first hidden layer 123b or the second hidden layer 123c on the basis of a loss function according to a difference between an ML result of the output layer 123d and a reference value.

The ML module 123 may generate first ML data for an updated version of a WAF obtained by updating the security of the current WAF of a maintenance-target device through ML training with regard to an update of a web application installed on the maintenance-target device or a new web application.

According to the present embodiment, the state of a product can be continuously checked using an ML-based self-check function, and also the ML-based self-check function makes it possible to check the objective state of a maintenance-target device or the WAF of the device in real time on the basis of a threshold value setting based on a usage data analysis suitable for the environment of a customer company without an engineer's visit.

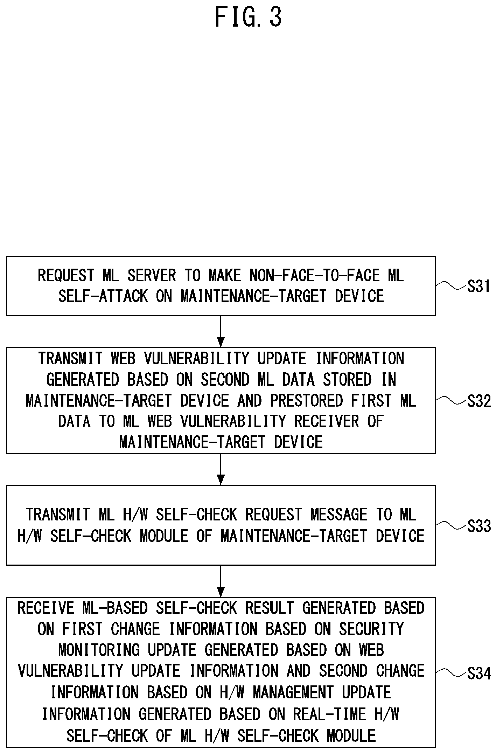

FIG. 3 is a flowchart illustrating a method of maintaining a WAF on the basis of non-face-to-face authentication using an ML self-check function (hereinafter "maintenance method") according to another example embodiment of the present invention.

Referring to FIG. 3, the maintenance method according to the present embodiment is performed by a maintenance apparatus including a non-face-to-face authentication server. First, an ML server is requested to make a non-face-to-face ML self-attack on a maintenance-target device (S31).

Then, the ML server receives second ML data stored in the maintenance-target device from an ML web vulnerability receiver of the maintenance-target device, generates web vulnerability update information of the maintenance-target device on the basis of the second ML data and first ML data stored in advance in the ML server, and transmits the generated web vulnerability update information to an ML web vulnerability receiver of the maintenance-target device (S32).

Subsequently, a non-face-to-face ML H/W self-check request message is transmitted to an ML H/W self-check module of the maintenance-target device (S33).

Then, an ML-based self-check result generated on the basis of first change information based on security monitoring update information generated on the basis of the web vulnerability update information and second change information based on H/W update information generated on the basis of a real-time H/W self-check of the ML H/W self-check module is received from the maintenance-target device (S34).

According to the present embodiment, a self-check result can be acquired on the basis of a security monitoring result and a H/W self-check result following a WAF attack, and it is possible to immediately perform a real-time check or take an action against an abnormality on the basis of the self-check result with regard to a maintenance-target device or a WAF of the device.

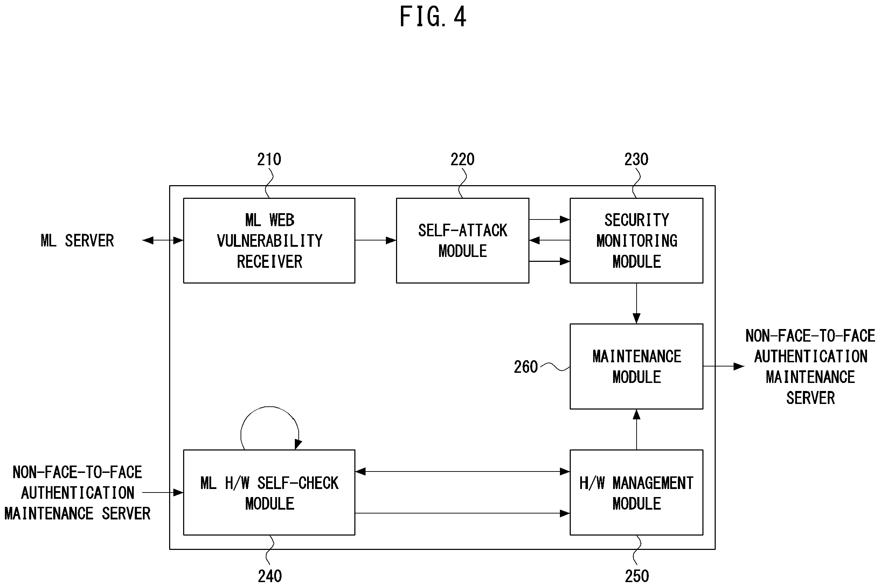

FIG. 4 is a block diagram of an apparatus for maintaining a WAF on the basis of non-face-to-face authentication using an ML self-check function according to still another example embodiment of the present invention.

Referring to FIG. 4, the maintenance apparatus according to the present embodiment includes an ML web vulnerability receiver 210, a self-attack module 220, a security monitoring module 230, an ML H/W self-check module 240, a H/W management module 250, and a maintenance module 260. In a narrow sense, the maintenance apparatus includes a maintenance-target device 200 that is connected to a non-face-to-face authentication maintenance server and an ML server through a network.

Each of the components are described in further detail below. The ML web vulnerability receiver 210 receives an ML data request message for the maintenance-target device 200 from the ML server. ML data is data stored in the maintenance-target device 200 or a storage combined with the ML web vulnerability receiver 210 and will be referred to as second ML data. The second ML data may include current security state information of a WAF of the maintenance-target device 200.

The ML web vulnerability receiver 210 transmits the second ML data to the ML server in response to the request. The ML server compares previously stored first ML data and the second ML data acquired from the ML web vulnerability receiver 210 and generates web vulnerability update information on the basis of the comparison result.

Also, the ML web vulnerability receiver 210 receives the web vulnerability update information from the ML server 120 through the network 350. Then, the ML web vulnerability receiver 210 transfers the web vulnerability update information to the self-attack module 220 installed in the maintenance-target device 200.

The self-attack module 220 updates self-attack information on the basis of the web vulnerability update information. Then, the self-attack module 220 activates a self-attack according to the updated self-attack information and a preset self-attack policy and attacks the security monitoring module 230 of the maintenance-target device 200.

The security monitoring module 230 generates a result of the attack (attack result) from the self-attack module 220 and transfers the generated attack result to the self-attack module 220. The self-attack module 220 generates security monitoring update information on the basis of the attack result from the security monitoring module 230 and transfers update information including the generated security monitoring update information to the security monitoring module 230.

Also, the security monitoring module 230 updates one or more selected from among a security monitoring setting, a WAF framework, a kernel package, a WAF test engine, a security monitoring engine, a security monitoring policy, etc. on the basis of the security monitoring update information and transfers information on a change (first change information) of the security monitoring module 230 made on the basis of the security monitoring update information to the maintenance module 260 of the maintenance-target device 200.

The ML H/W self-check module 240 receives a non-face-to-face ML self-check request message from the non-face-to-face authentication maintenance server 110. The non-face-to-face ML self-check request message may include a message format and message content preset with the maintenance-target device 200 or the ML H/W self-check module 240. The ML H/W self-check module 240 has a real-time H/W self-check on the basis of the non-face-to-face ML self-check request message.

Also, the ML H/W self-check module 240 may request H/W management information from the H/W management module 250 of the maintenance-target device 200 on the basis of the non-face-to-face ML self-check request message and receive a response including H/W management information. According to a form of implementation, the ML H/W self-check module 240 may directly read H/W management information stored in the H/W management module 250.

Further, the ML H/W self-check module 240 compares a real-time H/W self-check result and prestored H/W management information and generates update information including H/W update information or H/W management update information on the basis of the comparison result. According to a form of implementation, the ML H/W self-check module 240 may update the H/W management module 250 on the basis of the H/W update information.

The H/W management module 250 receives the update information from the ML H/W self-check module 240, updates a relevant H/W management part of the maintenance-target device 200 or the WAF on the basis of the update information, and transfers change information (second change information) of the H/W management module 250 resulting from the H/W management update to the maintenance module 260.

The maintenance module 260 generates an ML-based self-check result on the basis of the first change information and the second change information and transmits the generated self-check result to the non-face-to-face authentication maintenance server 110 through the network.

According to the present embodiment, in a maintenance-target device interoperating with a non-face-to-face authentication maintenance server and an ML server, a WAF can be effectively maintained in a non-face-to-face authentication manner.

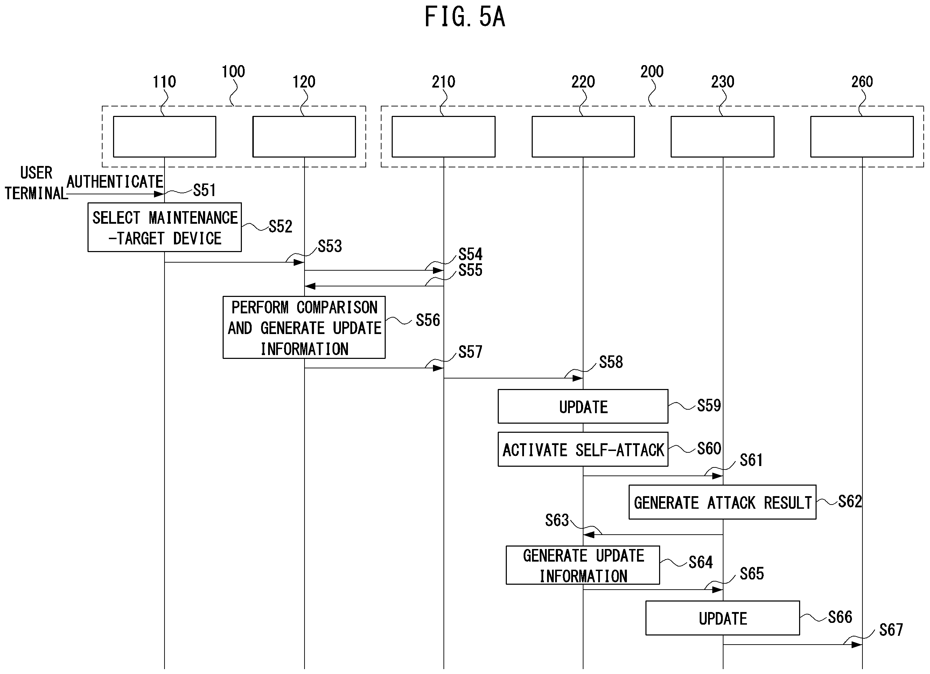

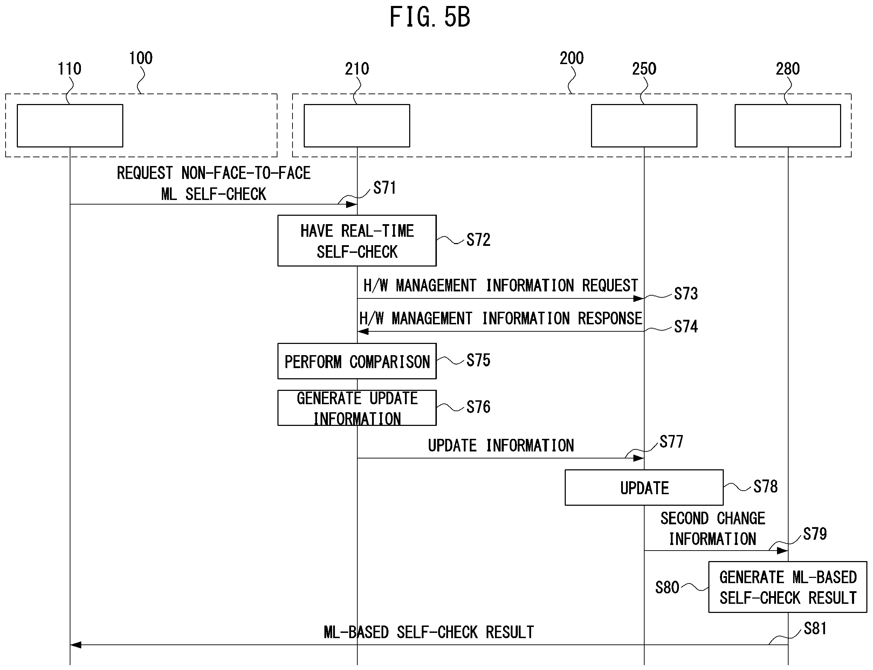

FIGS. 5A and 5B are sequential diagrams illustrating a method of maintaining a WAF on the basis of non-face-to-face authentication using an ML self-check function according to yet another example embodiment of the present invention.

Referring to FIG. 5A, in the maintenance method according to the present embodiment, when a user is authenticated through a user terminal in a network (S51), a non-face-to-face authentication maintenance server 110 of the maintenance apparatus 100 selects a maintenance-target device 200 on the basis of relevant information of the authenticated user (S52). The relevant information of the authenticated user includes at least some of information related to the maintenance-target device 200 corresponding to the user.

Subsequently, the non-face-to-face authentication maintenance server 110 requests an ML server 120 to make a non-face-to-face ML self-attack (S53). The non-face-to-face ML self-attack request may include information related to the maintenance-target device 200.

Subsequently, the ML server 120 requests ML data from an ML web vulnerability receiver 210 of the maintenance-target device 200 (S54). The ML data is data stored in the maintenance-target device 200 or a storage combined with the ML web vulnerability receiver 210 and will be referred to as second ML data. The second ML data may include current security state information of a WAF of the maintenance-target device 200.

Subsequently, the ML server 120 receives the second ML data from the ML web vulnerability in response to the request S54 (S55).

Subsequently, the ML server 120 compares previously stored first ML data and the second ML data acquired from the ML web vulnerability receiver 210 and generates web vulnerability update information on the basis of the comparison result (S56).

Subsequently, the ML server 120 transmits the web vulnerability update information to the ML web vulnerability receiver 210 through the network (S57).

Subsequently, the ML web vulnerability receiver 210 transfers the web vulnerability update information to a self-attack module 220 installed in the maintenance-target device 200 (S58).

Subsequently, the self-attack module 220 updates self-attack information on the basis of the web vulnerability update information (S59). Also, the self-attack module 220 activates a self-attack according to the updated self-attack information and a preset self-attack policy (S60) and attacks a security monitoring module 230 of the maintenance-target device 200 (S61).

Subsequently, the security monitoring module 230 generates a result of the attack (attack result) from the self-attack module 220 and transfers the generated attack result to the self-attack module 220 (S63).

Subsequently, the self-attack module 220 generates security monitoring update information on the basis of the attack result from the security monitoring module 230 (S64) and transfers update information including the generated security monitoring update information to the security monitoring module 230 (S65).

Subsequently, the security monitoring module 230 updates one or more selected from among a security monitoring setting, a WAF framework, a kernel package, a WAF test engine, a security monitoring engine, a security monitoring policy, etc. on the basis of the security monitoring update information (S66) and transfers information on a change (first change information) of the security monitoring module 230 made on the basis of the security monitoring update information to a maintenance module 260 of the maintenance-target device 200 (S67).

Next, as shown in FIG. 5B, the non-face-to-face authentication maintenance server 110 transmits a non-face-to-face ML self-check request message to an ML H/W self-check module 240 of the maintenance-target device 200 (S71). The non-face-to-face ML self-check request message may include a message format and message content preset with the maintenance-target device 200 or the ML H/W self-check module 240.

Subsequently, the ML H/W self-check module 240 performs a real-time H/W self-check on the basis of the non-face-to-face ML self-check request message received from the non-face-to-face authentication maintenance server 110 (S72).

Also, the ML H/W self-check module 240 may request H/W management information from a H/W management module 250 of the maintenance-target device 200 on the basis of the non-face-to-face ML self-check request message (S73) and receive a response including H/W management information (S74). According to a form of implementation, the ML H/W self-check module 240 may directly read H/W management information stored in the H/W management module 250.

Subsequently, the ML H/W self-check module 240 compares a real-time H/W self-check result and prestored H/W management information (S75) and generates update information including H/W update information or H/W management update information on the basis of the comparison result (S76). According to a form of implementation, the ML H/W self-check module 240 may update the H/W management module 250 on the basis of the H/W update information.

Subsequently, the H/W management module 250 receives the update information from the ML H/W self-check module 240 (S77), updates a relevant H/W management part of the maintenance-target device 200 or the WAF on the basis of the update information (S78), and transfers change information (second change information) of the H/W management module 250 resulting from the H/W management update to the maintenance module 260 (S79).

Subsequently, the maintenance module 260 generates an ML-based self-check result on the basis of the first change information and the second change information (S80) and transmits the generated self-check result to the non-face-to-face authentication maintenance server 110 through the network (S81).

According to the present embodiment, it is possible to check the security state of a WAF of a maintenance-target device in real time using an ML-based self-check result on the basis of first change information based on security monitoring update information generated on the basis of web vulnerability update information and second change information based on H/W management update information generated on the basis of a H/W self-check, and it is possible to immediately take an action against an abnormality in the security state.

In addition, an ML module of an ML server is additionally trained on the basis of an ML-based self-check result. Accordingly, it is possible to effectively maintain a WAF with high reliability in the case of maintaining the same type of devices to be maintained afterwards, the case of a security update following the installation of a new web application, etc.

Meanwhile, in the above-described example embodiment, a maintenance apparatus includes a non-face-to-face authentication maintenance server and an ML server or includes only a maintenance-target device. However, the present invention is not limited to the configuration, and a maintenance apparatus may include an ML web vulnerability receiver, a self-attack module, a security monitoring module, an ML H/W self-check module, a H/W management module, and a maintenance module of a maintenance-target device in addition to a face-to-face authentication maintenance server and an ML server.

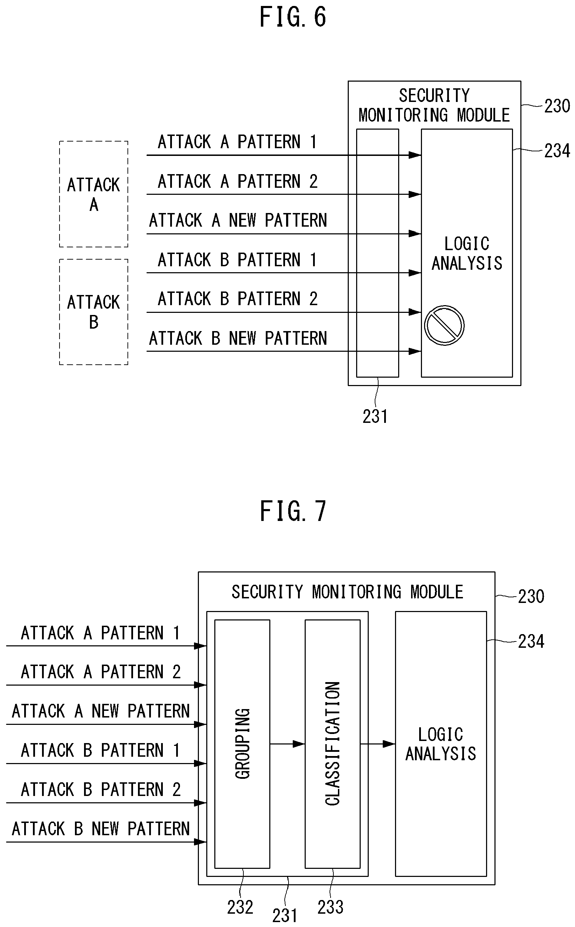

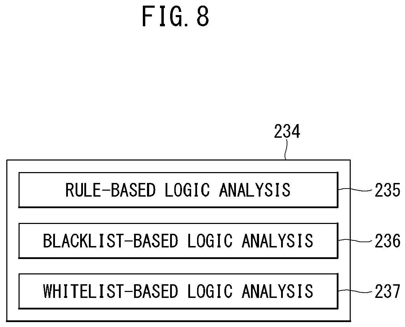

FIG. 6 is a block diagram illustrating a detailed configuration of a security monitoring module that may be employed in a WAF maintenance apparatus according to the present embodiment. FIG. 7 is a block diagram illustrating an ML engine of the security monitoring module of FIG. 6. FIG. 8 is a block diagram illustrating a logic analysis engine of the security monitoring module of FIG. 6.

Referring to FIG. 6, a security monitoring module 230 includes an ML engine 231 and a logic analysis engine 234. When attack A or attack B comes in from the outside through a WAF, log data collected through a WAF operation is grouped and classified by the ML engine 231, and a logic analysis is performed by the logic analysis engine 234 according to a preset rule. In this way, it is possible to effectively block external attack A or attack B.

Attack A or attack B may include attack patterns such as pattern 1, pattern 2, and a new pattern. Pattern 1 and pattern 2 are attack patterns that have existed somewhere, and the new pattern is an attack pattern that has not existed anywhere.

More specifically, the security monitoring module 230 includes the ML engine 231 and the logic analysis engine 234 as shown in FIG. 7, and the ML engine 231 may include a grouping sub-engine 232 for grouping log data pre-collected through the WAF and a classification sub-engine 233 for classifying the grouped data into normal data and abnormal data.

Also, as shown in FIG. 8, the logic analysis engine 234 of the security monitoring module 230 may include a rule-based logic analysis sub-engine 235, a blacklist-based logic analysis sub-engine 236, and a whitelist-based logic analysis sub-engine 237. In this case, the logic analysis engine 234 can minimize the cases of being incapable of detecting an attack or wrongly (incorrectly) detecting an attack by simply comparing analysis data with patterns and can flexibly cope with various new attacks or abnormalities of variant attacks.

According to this configuration, the security monitoring module 230 to which an ML engine is applied may perform supervised learning through an estimation model in a training mode, group log data in a test mode or a real-time security monitoring mode, and classify the grouped data to estimate or detect occurrence of an abnormality. In the training mode, the security monitoring module 230 may improve security monitoring performance through reinforcement learning about actual cases of abnormality estimation or detection. In addition, the security monitoring module 230 may take a self-action against a detected abnormality or transfer information on the detected abnormality to a maintenance module or a H/W management module so that a preset confrontational action may be taken.

Moreover, according to the configuration of the present embodiment, a maintenance apparatus including the security monitoring module 230 or an ML H/W self-check module can continuously check the state of a WAF or a product on which a WAF is installed using an ML-based self-check function. Also, the maintenance apparatus can perform a real-time objective state checking operation using an ML-based self-check function according to a threshold value setting based on a usage data analysis suitable for the environment of a customer company without an engineer's visit. Further, the maintenance apparatus can provide an alarm function of determining a product state on the basis of ML and notifying of the probability of a failure in advance. In addition, the maintenance apparatus can provide an accurate maintenance service without a human error using an automated regular check tool.

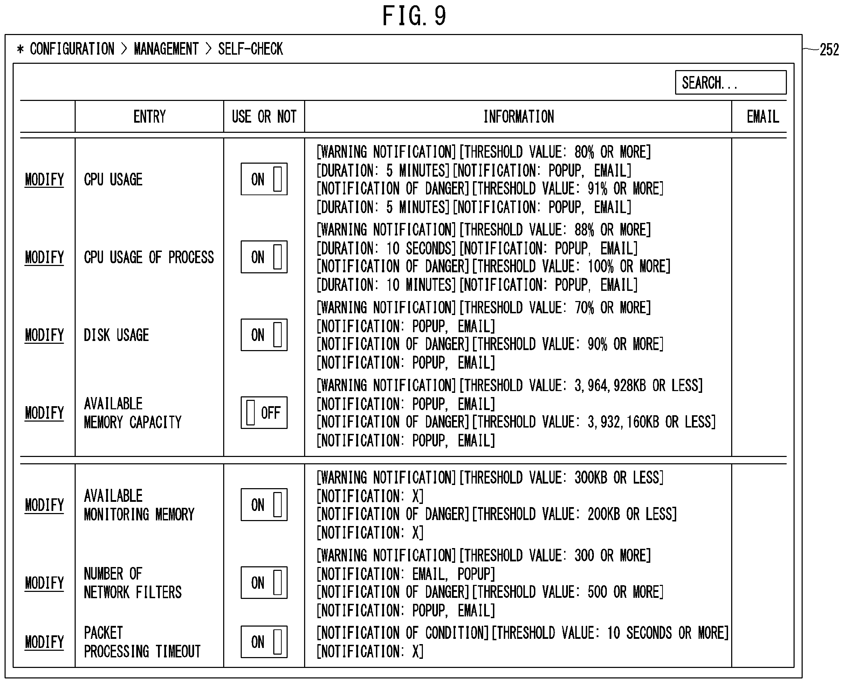

FIG. 9 is an example of an administrator terminal screen illustrating a self-check process performed by a H/W management module of the WAF maintenance apparatus according to the present embodiment.

Referring to FIG. 9, a H/W management module may provide a user interface screen 252 for a self-check to an administrator terminal. To this end, an ML H/W self-check module 240 (see FIG. 4) may monitor the state of a WAF and provide a monitoring result to the H/W management module.

Depending on a self-monitoring result of the ML H/W self-check module, the H/W management module may notify an administrator of the situation and take action according to a preset countermeasure procedure when there is an abnormality while the administrator is absent.

For example, the H/W management module may set whether to use H/W resource entries, such as central processing unit (CPU) usage, the CPU usage of a process, the number of network filters, disk usage, and available memory capacity, or network entries, such as available detection memory, the number of network filters, and packet processing timeout, and when a preset threshold value is exceeded or the threshold value continues for a set certain time, the H/W management module may notify the administrator of the situation through a popup or email and correct an abnormality of the corresponding entry by itself using a method of initializing resources of or a network connection to the corresponding entry and the like.

According to the above-described configuration, a H/W management module can automatically perform a self-check on the state of a WAF. Also, a maintenance module can perform a preset countermeasure procedure according to a H/W self-check result or a WAF state check result.

According to the present embodiment, the ML technology is introduced to perform a self-check on a WAF, prevent a probable abnormality through the self-check, and automatically handle an abnormality occurring. An example of the countermeasure procedure of such a self-check function is as follows.

First, the maintenance apparatus monitors abnormalities such as traffic overload, CPU overload, and insufficient database capacity.

Subsequently, the ML engine collects log data of a WAF operation for a signal and data currently transmitted or received normally and groups the collected log data.

Subsequently, abnormality data is distinguished from among the grouped data.

Subsequently, when the classified abnormal data exceeds a threshold value or the threshold value continues for more than a preset time, a preset countermeasure procedure is performed by the maintenance module. The countermeasure procedure may include abnormality warning, raising of a danger alarm, and self-countermeasure processing.

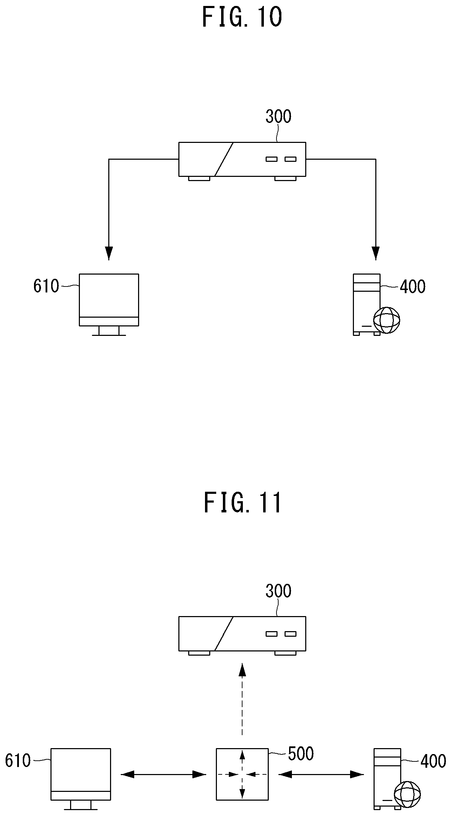

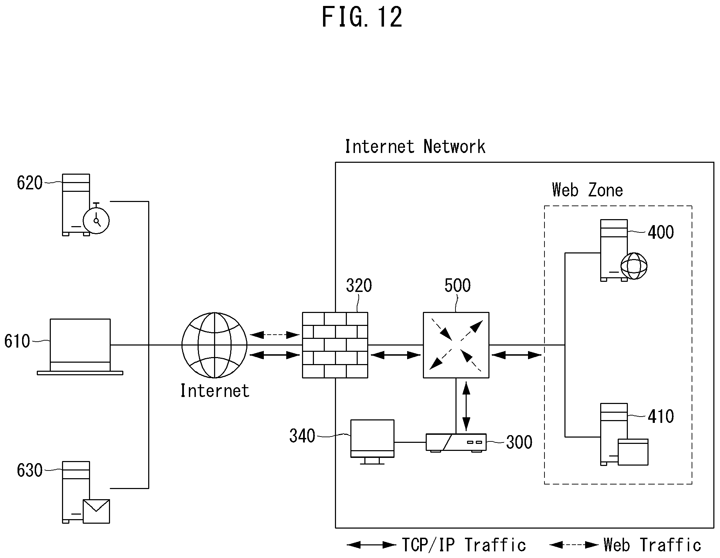

FIG. 10 is an example diagram illustrating an installation structure of the WAF maintenance apparatus according to the present embodiment. FIG. 11 is another example diagram illustrating an installation structure of the WAF maintenance apparatus according to the present embodiment. FIG. 12 is still another example diagram illustrating an installation structure of the WAF maintenance apparatus according to the present embodiment.

Referring to FIG. 10, a maintenance apparatus 300 may include a non-face-to-face authentication maintenance server 110 and an ML server 120. The maintenance apparatus 300 may be installed to detect or block all packets transmitted from an external client 610 to a web server 400 having a WAF without revealing the presence thereof. The external client 610 includes various user terminals connected to the web server 400 through a network such as the Internet. The user terminals include any terminals that are accessible through a wired network, a wireless network, a satellite network, or a combination thereof.

As shown in FIG. 11, the maintenance apparatus 300 may be connected to a switch 500 interposed between an external client 610 and the web server 400. According to this configuration, the maintenance apparatus 300 may operate in a reverse proxy mode so that all packets transmitted from the external client 610 to the web server 400 may be transmitted to the service Internet protocol (IP) address of the maintenance apparatus 300 or may operate in a mirroring mode not only to monitor but also to block all packets that are transmitted from the external client 610 to the web server 400 without modulation.

Further, the maintenance apparatus 300 may monitor transmission control protocol (TCP)/IP traffic through a WAF 320 in a private network connected to the Internet. When blocking an external attack, the maintenance apparatus 300 may report the blocking an external attack to a web server 400 or a web application program 410 of a web zone in the private network in connection with a switch 500, such as an L2 or L3 switch, and report the management result to an administrator 340 or an administrator terminal. In this case, the maintenance apparatus 300 maintains the WAF 320 on the basis of non-face-to-face authentication using an ML self-check function while monitoring web traffic. Accordingly, it is possible to effectively block a new attack from an unknown hacker and the like even while the maintenance apparatus 300 is interoperating with an external device such as a web client 610, a network time protocol (NTP) server 620, and a simple mail transfer protocol (SMTP) server 630.

According to the above-described present invention, a product supply company can provide a service for checking and examining the state of a WAF or a product having a WAF and taking an action on an abnormality in real time in a non-face-to-face manner so that customers who buy a product can smoothly use the product. For example, it is possible to continuously check the state of the product using an ML-based self-check function, and also the ML-based self-check function makes it possible to check an objective state with a threshold value setting based on a usage data analysis suitable for the environment of a customer company without an engineer's visit.

According to the present invention, it is also possible to prevent human errors caused by a maintenance worker and the like. That is, it is possible to provide an alarm function of determining a product state on the basis of ML and notifying of an abnormality such as the probability of a failure. In other words, it is possible to provide a highly reliable alarm function with ML-based data so as not to omit maintenance.

According to the present invention, it is also possible to provide an accurate maintenance service without a human error by automatically taking an action and the like on an abnormality or using an automated regular check tool according to a maintenance setting.

According to the present invention, it is also possible to efficiently check a WAF in a non-face-to-face manner. In other words, a check time can be reduced to the minimum using an automated regular check tool, and it is possible to prevent financial damage, a customer company's awareness damage, etc. caused by a failure occurring in a WAF.

The above-described maintenance method according to the example embodiment may be implemented as a computer-readable program or code in a computer-readable recording medium. The computer-readable recording medium may include any type of recording devices in which data that can be read by a computer system is stored. In the computer-readable recording medium, a program or code that is distributed to a computer system connected through a network and that can be read by a computer in a distributed manner may be stored and executed.

Examples of the computer-readable recording medium may include an H/W device specially configured to store and execute program commands, such as a read-only memory (ROM), a random access memory (RAM), a flash memory, and the like. Examples of the program commands may include not only a machine language code generated by a compiler but also a high-level language code that may be executed by a computer by means of an interpreter or the like.

Some aspects of the present invention have been described in the context of a method or an apparatus but may be indicated by the corresponding units or elements that perform functions corresponding to the units. For example, a module, an apparatus, or a step of a method may be performed by or using a hardware device such as a microprocessor, a programmable computer, or an electronic circuit. In some embodiments, one or more of important steps of the method may be performed by such a device.

In example embodiments, a programmable logic device, for example, a field-programmable gate array, may be used to perform some or all of functions of the above-described methods. In example embodiments, the field-programmable gate array may operate in combination with a microprocessor for performing one of the above-described methods.

While the exemplary embodiments of the present invention have been described above, those of ordinary skill in the art should understand that various changes, substitutions and alterations may be made without departing from the spirit and scope of the present invention as defined by the following claims.

## Claims

1. A method of maintaining a web application firewall on the basis of non-face-to-face authentication by a non-face-to-face authentication maintenance server connected to a maintenance-target device through a network, the method comprising:
requesting a machine learning server to make a non-face-to-face machine learning self-attack on the maintenance-target device selected through user authentication in the network;
requesting a machine learning hardware self-check module of the maintenance-target device connected through the network to have a non-face-to-face machine learning self-check; and
receiving a machine learning-based self-check result based on first change information of a security monitoring module of the maintenance-target device and second change information of a hardware management module of the maintenance-target device from a maintenance module of the maintenance-target device.

2. The method of claim 1, further comprising comparing, by the machine learning server, first machine learning data stored in advance regarding the maintenance-target device and second machine learning data of the maintenance-target device received from a machine learning web vulnerability receiver of the maintenance-target device and updating the second machine learning data on the basis of a comparison result.

3. The method of claim 2, wherein the machine learning web vulnerability receiver transfers an update result of the second machine learning data to a self-attack module of the maintenance-target device,
the self-attack module makes an attack on the security monitoring module on the basis of the update result, receives a result of the attack from the security monitoring module, and transfers security monitoring update information to the security monitoring module on the basis of the attack and the result of the attack, and
the security monitoring module generates the first change information on the basis of the security monitoring update information.

4. The method of any one of claims 1 to 3, wherein the machine learning hardware self-check module performs a real-time hardware self-check on a web application firewall of the maintenance-target device, receives a previously stored hardware check result of the hardware management module, and compares the hardware check result and a result of the hardware self-check to generate and transfer hardware update information to the hardware management module, and
the hardware management module generates the second change information on the basis of the hardware update information.

5. The method of claim 1, wherein the maintenance-target device comprises:
a web application firewall in the form of equipment or a program or security equipment or a security program equipped with the web application firewall;
a platform of an autonomous vehicle that is accessible through a wired or wireless network;
a web application firewall of a network of a home or office in which Internet of Things (IoT) home appliances are used; or
a meter for a consumption of daily life resources including at least one of gas, water, and electricity.

6. A method of maintaining a web application firewall on the basis of non-face-to-face authentication by a maintenance-target device connected to a non-face-to-face authentication maintenance server and a machine learning server through a network, the method comprising:
receiving, by a machine learning hardware self-check module of the maintenance-target device, a non-face-to-face machine learning self-check request from the non-face-to-face authentication maintenance server, performing a real-time self-check on hardware of a web application firewall of the maintenance-target device on the machine learning self-check request, comparing a hardware check result received from a hardware management module of the maintenance-target device and a result of the real-time self-check, generating hardware update information on the basis of a comparison result, and transferring the hardware update information to the hardware management module;
transmitting, by a machine learning web vulnerability receiver of the maintenance-target device connected to the machine learning server, second machine learning data for a non-face-to-face machine learning self-attack to the machine learning server;
receiving, by the machine learning web vulnerability receiver, update information of the machine learning server based on a comparison result between first machine learning data of the machine learning server and the second machine learning data to update the second machine learning data, and transferring an update result to a self-attack module of the maintenance-target device;
attacking, by the self-attack module, a security monitoring module of the maintenance-target device, receiving a result of the attack from the security monitoring module, and transferring security monitoring update information to the security monitoring module on the basis of the result of the attack; and
transmitting, by a maintenance module of the maintenance-target device, a machine learning-based self-check result based on first change information, which is generated by the security monitoring module on the basis of the security monitoring update information, and second change information, which is generated by the hardware management module on the basis of the hardware update information, to the non-face-to-face authentication maintenance server.

7. The method of claim 6, further comprising receiving, by the machine server server, a request for the non-face-to-face machine learning self-attack from the non-face-to-face authentication maintenance server.

8. An apparatus for maintaining a web application firewall on the basis of non-face-to-face authentication in connection with a non-face-to-face authentication maintenance server and a machine learning server through a network, the apparatus comprising:
a machine learning web vulnerability receiver configured to provide second machine learning data for a non-face-to-face machine learning self-attack to the machine learning server connected through the network, receive web vulnerability update information based on a comparison result between first machine learning data of the machine learning server and the second machine learning data from the machine learning server to update the second machine learning data, and transfer web vulnerability information according to an update result to a self-attack module;
the self-attack module configured to attack a security monitoring module of the maintenance-target device on the basis of the update result, receive a result of the attack from the security monitoring module, and transfer security monitoring update information to the security monitoring module on the basis of the result of the attack;
the security monitoring module configured to generate first change information on the basis of the security monitoring update information and transfer the first change information to a maintenance module;
a machine learning hardware self-check module configured to receive a non-face-to-face machine learning self-check request from the non-face-to-face authentication maintenance server, perform a real-time self-check on hardware of a web application firewall of the maintenance-target device on the machine learning self-check request, compare a hardware check result received from a hardware management module and a result of the real-time self-check, generate hardware update information on the basis of a comparison result, and transfer the hardware update information to the hardware management module;
the hardware management module configured to generate second change information on the basis of the hardware update information and transfer the second change information to the maintenance module; and
the maintenance module configured to transmit a machine learning-based self-check result based on the first change information and the second change information to the non-face-to-face authentication maintenance server.

9. An apparatus for maintaining a web application firewall on the basis of non-face-to-face authentication in connection with a maintenance-target device through a network, the apparatus comprising:
a non-face-to-face authentication maintenance server configured to transmit a non-face-to-face machine learning self-attack request against the maintenance-target device selected through user authentication in the network to a machine learning server and request a machine learning hardware self-check module of the maintenance-target device connected through the network to have a non-face-to-face machine learning self-check; and
the machine learning server configured to compare first machine learning data previously stored regarding the maintenance-target device and second machine learning data received from a machine learning web vulnerability receiver of the maintenance-target device in cooperation with the machine learning web vulnerability receiver on the non-face-to-face machine learning self-attack request to generate web vulnerability update information and transfer the generated web vulnerability update information to the machine learning web vulnerability receiver,
wherein the non-face-to-face authentication maintenance server receives a machine learning-based self-check result generated on the basis of first change information and second change information from the maintenance-target device,
the first change information is based on security monitoring update information according to a web vulnerability-based self-attack result of the maintenance-target device, and
the second change information is based on hardware update information of the maintenance-target device according to a real-time self-check of the machine learning hardware self-check module.
